# EUROPÄISCHE PATENTANMELDUNG

(11) **EP 0 656 303 A1**
(43) Veröffentlichungstag der Anmeldung: **07.06.1995**
(21) Anmeldenummer: 94118842.7
(22) Anmeldetag: 30.11.1994
(51) Int. Cl.: B65F 1/06, B65F 1/16

(54) **Papiersammelbehälter**

(30) Priorität: 03.12.1993 DE 9318407 U
(71) Anmelder: System Entsorgung GmbH, A-4694 Ohlsdorf (DE)
(72) Erfinder: Huber, Erwin August, A-4694 Ohlsdorf (AT)
(74) Vertreter: Ostertag, Ulrich

(57) **Zusammenfassung**

Ein Papiersammler besteht aus einem aus textilem Material hergestellten Sammelsack (10) und einem diesen umgebenden rechteckigen Behälter (12) aus Karton, der unten offen ist und einen ebenfalls aus Karton gefertigten Deckel (36) trägt. Der Behälter (12) hat einen schmalen Einwurfschlitz (14) für Papierbögen.

## Beschreibung

Auf dem Markt erhältliche Papiersammler bestehen aus einem in der Regel aus Kunststoffolie gefertigten Plastiksack, dessen oberes Ende an einem Haltering befestigt ist, der über eine oder mehrere vertikale Stangen von einem Fußteil getragen ist. Das obere Ende des vom Sackhalter getragenen Sammelsackes ist durch einen verschwenkbaren Deckel verschließbar.

In derartige Papiersammler werden vom Benutzer Papierabfälle oft in zerknüllter Form gegeben. Verpackungen und dergleichen werden oft in nicht zusammengefaltetem Zustand bzw. unzerkleinert in den Sammelsack eingefüllt. Dies hat den Nachteil, daß der Sammelsack verhältnismäßig schnell mit Altpapier gefüllt ist und ausgetauscht werden muß. Außerdem ist auch die Weiterverarbeitung des Altpapiers beeinträchtigt.

Durch die vorliegende Erfindung soll daher ein Papiersammler gemäß dem Oberbegriff des Anspruches 1 so weitergebildet werden, daß das eingegebene Altpapier, insbesondere Schriftgut auf DIN-A4-Bogen, platzsparend und leicht maschinell weiterverarbeitbar gesammelt wird.

Diese Aufgabe ist erfindungsgemäß gelöst durch einen Papiersammler mit den im Anspruch 1 angegebenen Merkmalen.

Dadurch, daß der erfindungsgemäße Papiersammler einen nur schmalen Einwurfschlitz aufweist, läßt sich in ihn nur normales Schriftgut und flaches Altmaterial direkt eingeben. Verpackungen oder dergleichen müssen erst in ihre Teile zerlegt werden und eben gelegt werden, damit sie durch den Einwurfschlitz passen. Auf diese Weise ist gewährleistet, daß sich im Inneren des Papiersammlers ein Stapel übereinanderliegender Papierbogen bildet.

Vorteilhafte Weiterbildungen der Erfindung sind in Unteransprüchen angegeben.

Nachstehend wird die Erfindung anhand von Ausführungsbeispielen unter Bezugnahme auf die Zeichnung näher erläutert. In dieser zeigen:
- Figur 1:: eine Aufsicht auf die Frontseite eines Papiersammlers, teilweise in der vertikalen Quermittelebene geschnitten;

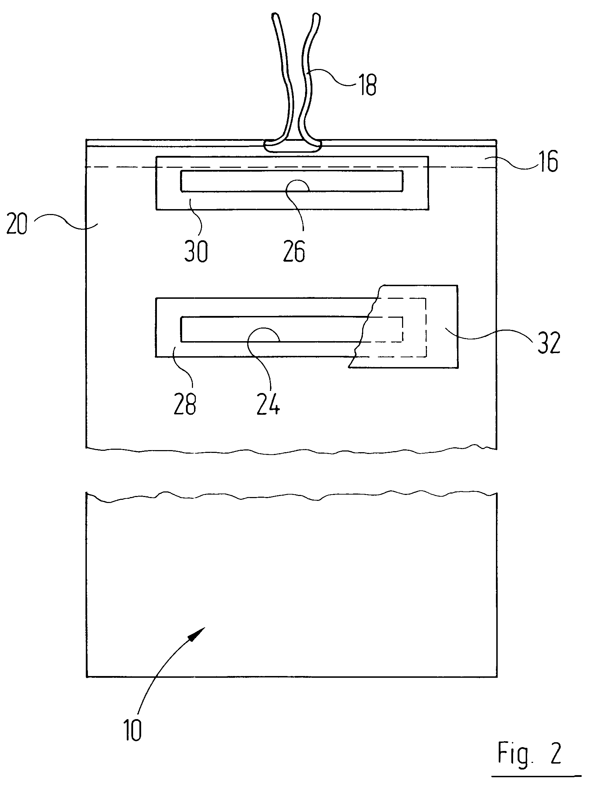

- Figur 2:: eine Aufsicht auf einen Sammelsack, der in dem Papiersammler nach Figur 1 verwendet wird;
- Figur 3:: eine ähnliche Ansicht wie Figur 1, in welcher ein abgewandelter Papiersammler wiedergegeben ist;
- Figur 4:: eine ähnliche Ansicht wie Figur 1, in welcher ein nochmals abgewandelter Papiersammler gezeigt ist; und

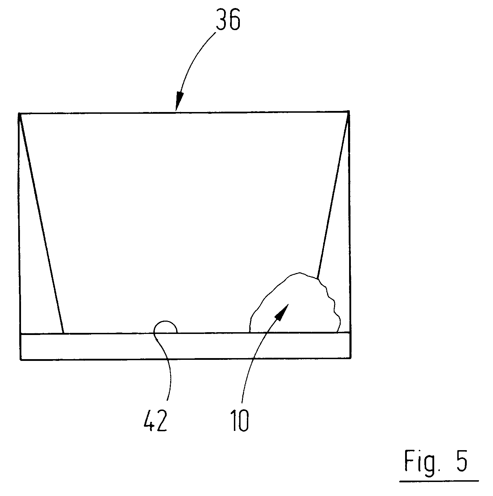

- Figur 5:: eine Aufsicht auf den in Figur 4 gezeigten Papiersammler.

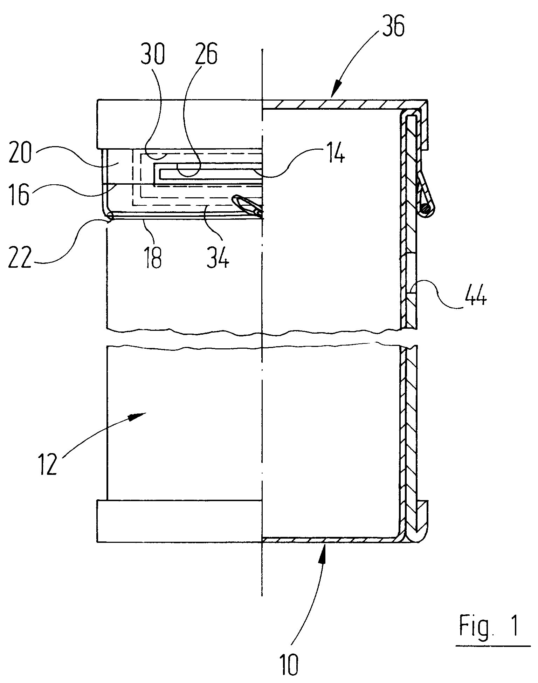

In Figur 1 ist mit 10 ein aus textilem Material hergestellter Sammelsack bezeichnet. Dieser befindet sich im Inneren eines in Aufsicht gesehen rechteckigen Behälters 12, welcher aus Karton oder Wellpappe hergestellt ist und unten und oben offen ist. Ein unterer Endabschnitt des Behälters 12 ist nach außen umgekantet und bildet so eine Versteifung des unteren Behälterendes.

In der Frontwand des Behälters 12, der in der Praxis eine Breite von 56 cm, eine Tiefe von 36 cm und eine Höhe von 105 cm haben kann, woraus sich ein nutzbares Volumen des Sammelsackes 10 von etwa 220 l entsprechend 70 kg Papier ergibt, ist in einer Höhe von etwa 90 cm über dem unteren Behälterende ein Einwurfschlitz 14 vorgesehen. Dieser hat in der Praxis eine Länge von etwa 40 cm und eine Höhe von etwa 5 cm.

Das obere Ende des Sammelsackes 10 hat einen Saum 16, in welchem sich eine Schnur 18 befindet. Bei betriebsbereitem Papiersammler ist ein oberer Endabschnitt 20 des Sammelsackes 10 über das obere Ende des Behälters 12 gelegt, und die Schnur 18 ist angezogen und greift in bei den vertikalen Kanten in entsprechender Höhe vorgesehe Kerben 22 des Behälters 12 ein.

In denjenigen Bereichen, die bei angebrachtem Sammelsack 10 mit dem Einwurfschlitz 14 fluchten, sind im Sammelsack Durchgangsöffnungen 24, 26 vorgesehen. Die Durchgangsöffnungen 24, 26 sind von Klebstoffbereichen 28, 30 umgeben, die durch selbstklebendes Material gebildet sind und bei Anlieferung des Sammelsackes 10 durch Schutzstreifen 32 abgedeckt sind. Auf diese Weise läßt sich der Sammelsack 10 im Bereich des Einwurfschlitzes 14 einfach und zuverlässig mit dem Kartonmaterial des Behälters 12 verbinden, wobei man auf dem Kartonmaterial in der Umgebung des Einwurfschlitzes 14 Abdeckungen 34 aus Folienmaterial vorsehen kann, damit sich die Klebstoffbereiche 28, 30 beim Entnehmen des Sammelsackes 10 leicht ablösen lassen.

Das obere Ende des am Behälter 12 angebrachten Sammelsackes 10 ist durch einen Deckel 36 verschlossen, der ebenfalls aus Kartonmaterial hergestellt ist und eine dem Querschnitt des Behälters 12 angepaßte Querschnittsgeometrie hat.

Der Deckel 36 kann im Bedarfsfalle abgenommen werden, um größere Papierstapel, z.B. nicht mehr benötigte Endlosausdrucke, in den Sammelsack 10 zu werfen.

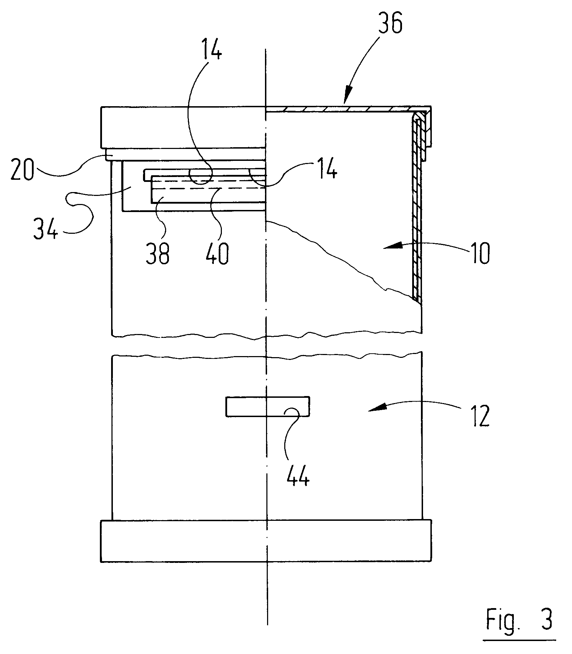

Beim Ausführungsbeispiel nach Figur 3 sind Teile des Papiersammlers, die obenstehend schon erläutert wurden, wieder mit denselben Bezugszeichen versehen. Diese Teile brauchen nachstehend nicht nochmals im einzelnen beschrieben zu werden.

Der Sammelsack 10 wird gemäß Figur 3 so am Behälter 12 festgelegt, daß die Unterkante des umgelegten oberen Sackendes über der Oberkante des Einwurfschlitzes 14 liegt. Damit braucht der Sammelsack 10 nur noch eine einzige Durchgangsöffnung 26 aufzuweisen, wobei diese dadurch erhalten ist, daß man einen entsprechenden Materiallappen 38 an drei Seiten aus dem Sackmaterial ausschneidet. Der Materiallappen 38 ist bei eingesetztem Sammelsack 10 durch den Einwurfschlitz 14 hindurchgezogen und trägt auf seiner in Figur 3 hinten liegenden Seite einen Klebebereich 40, mit welchem er wieder am Behälter 12 festgelegt wird.

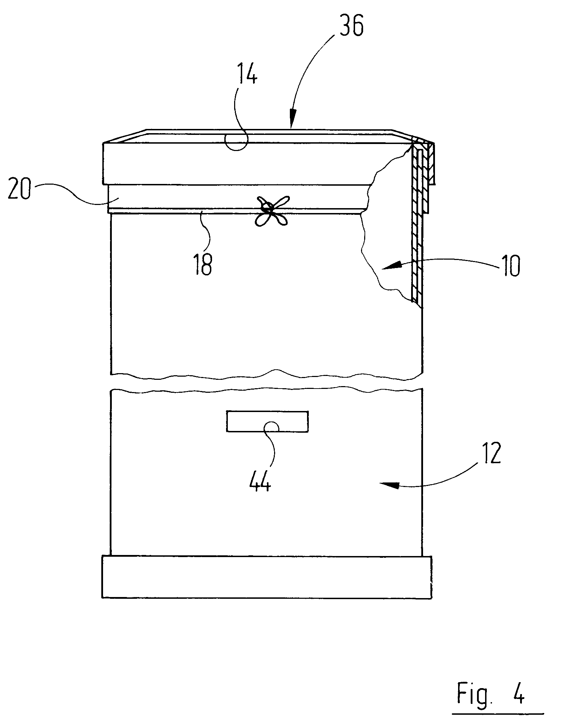

Beim Ausführungsbeispiel nach Figur 4 ist der Einwurfschlitz 14 in den Deckel 36 verlegt, der einen parallel zu seiner einen Längskante verlaufenden Schnitt 42 aufweist und in seinem Hauptteil prismenähnlich hochgefaltet ist, so daß man einen parallel zur Deckeloberseite wirksamen Einwurfschlitz 14 erhält. Bei dieser Lage des Einwurfschlitzes 14 braucht der Sammelsack 10 keine Durchgangsöffnung aufzuweisen.

Bei allen oben beschriebenen Ausführungsbeispielen wird dann, wenn der Sammelsack 10 mit flach übereinanderliegenden, einen Stapel bildenden Papierbogen gefüllt ist, der Deckel 36 abgenommen und das obere Ende des Sammelsackes 10 vom Behälter 12 gelöst und bleibend verschlossen, z.B. durch Zuziehen und Verschließen der Schnur 18. Danach wird der Behälter 12 an in zwei gegenüberliegenden Behälterwänden vorgesehenen Grifföffnungen 44 erfaßt und hochgezogen, während der schwere Sammelsack 10 auf dem Boden stehenbleibt.

Nach dem Wegtragen oder Wegfahren des Sammelsackes wird dann am Behälter 12 wieder das obere Ende eines leeren Sammelsackes 10 befestigt und der Deckel 36 aufgesetzt.

## Patentansprüche

1. Papiersammler mit einem Sammelsack (10) und einem Sackhalter (12, 36), der Mittel zum Festlegen des oberen Endes des Sammelsackes (10) und einen Deckel (36) zum Verschließen des offen von ihm gehaltenen Sammelsackes (10) aufweist, dadurch gekennzeichnet, daß der Sackhalter (12, 36) einen schmalen Einwurfschlitz (14) aufweist.

2. Papiersammler nach Anspruch 1, dadurch gekennzeichnet, daß die Länge des Einwurfschlitzes (14) etwa 30 bis 40 cm, vorzugsweise etwa 36 cm, und seine Breite etwa 2 bis 8 cm, vorzugsweise etwa 5 cm, beträgt.

3. Papiersammler nach Anspruch 1 oder 2, dadurch gekennzeichnet, daß der Einwurfschlitz (14) am Deckel (36) des Sackhalters (12, 36) vorgesehen ist.

4. Papiersammler nach Anspruch 3, dadurch gekennzeichnet, daß der Einwurfschlitz (14) bei einer der horizontalen Kanten des rechteckig ausgebildeten Deckels (36) vorgesehen ist.

5. Papiersammler nach Anspruch 1 oder 2, dadurch gekennzeichnet, daß der Einwurfschlitz (14) beim oberen Ende eines den Sammelsack (10) umgebenden Behälters (12) vorgesehen ist, und der Sammelsack (10) mindestens eine dem Einwurfschlitz (14) benachbarte Durchgangsöffnung (24) aufweist.

6. Papiersammler nach Anspruch 5, dadurch gekennzeichnet, daß ein über das obere Ende des Behälters (12) gelegter Endabschnitt (20) des Sammelsackes (10) ebenfalls eine mit dem Einwurfschlitz (14) fluchtende Durchgangsöffnung (26) aufweist.

7. Papiersammler nach Anspruch 5 oder 6, dadurch gekennzeichnet, daß die Durchgangsöffnungen (24, 26) des Sammelsackes (10) von Klebstoffbereichen (28, 30) zumindest teilweise umgeben sind.

8. Papiersammler nach einem der Ansprüche 5 bis 7, dadurch gekennzeichnet, daß ein die Durchgangsöffnung (24) freigebender Materiallappen (38) durch den Einwurfschlitz (14) hindurchgezogen ist.

9. Papiersammler nach einem der Ansprüche 1 bis 8, dadurch gekennzeichnet, daß der Deckel (36) rechteckig ist und von einem passend rechteckigen Querschnitt aufweisenden Behälter (12) getragen ist.

10. Papiersammler nach einem der Ansprüche 1 bis 9, dadurch gekennzeichnet, daß der Sammelsack (10) von einem Behälter (12) umgeben ist, der nach unten offen ist und den Deckel (36) trägt.

11. Papiersammler nach einem der Ansprüche 1 bis 10, dadurch gekennzeichnet, daß das obere Ende des Sammelsackes (10) Mittel (18) zum bleibenden Verschließen des Sammelsackes aufweist.

12. Papiersammler nach einem der Ansprüche 1 bis 11, dadurch gekennzeichnet, daß der Deckel (36) und ein den Sammelsack (10) umgebender Behälter (12) aus Karton, Wellpappe oder einem anderen Leicht-Plattenmaterial hergestellt sind.

13. Papiersammler nach einem der Ansprüche 1 bis 12, dadurch gekennzeichnet, daß der Sackhalter (12, 36) mit vorzugsweise seitlichen Griffen (44) versehen ist.

14. Papiersammler nach einem der Ansprüche 1 bis 13, dadurch gekennzeichnet, daß ein den Sammelsack (10) umgebender und den Deckel (36) tragender Behälter (12) eine Breite von etwa 50 bis 60 cm, vorzugsweise etwa 56 cm, eine Tiefe von etwa 30 bis 40 cm, vorzugsweise etwa 36 cm, und eine Höhe von 90 bis 120 cm, vorzugsweise etwa 105 cm, aufweist.
